# EUROPEAN PATENT APPLICATION

(11) **EP 3 923 243 A1**
(43) Date of publication of application: **15.12.2021**
(21) Application number: 20179113.4
(22) Date of filing: 09.06.2020
(51) Int. Cl.: G06T 11/60, H04N 7/15, A45D 44/00

(54) **PROVIDING AUGMENTED IMAGE FEED**

(71) Applicant: Koninklijke Philips N.V., 5656 AG Eindhoven (NL)
(72) Inventor: Van Es, Michel, 5656 AE Eindhoven (NL); De Vries, Siebrand Leen, 5656 AE Eindhoven (NL)
(74) Representative: Philips Intellectual Property & Standards

(57) **Abstract**

According to an aspect, there is provided a method for providing an augmented image feed, the method comprising: acquiring (202) an original image feed; performing (204) image processing to apply a blurring effect to the full frame of the original image feed so as to generate a blurred image feed; and performing (206) continuous face detection in the original image feed to determine whether a face of a subject is depicted, wherein when no face is detected in the original image feed, the method comprises outputting (208) the blurred image feed, wherein when a face of a subject is detected, the method comprises: performing(210) image processing to a first portion of the frame to reverse the blurring effect so as to generate an augmented image feed; and controlling (212) the display unit to output the augmented image feed, and wherein the method further comprises discarding (214) the image feeds.

## Description

### FIELD OF THE INVENTION

The present disclosure relates to a computer-implemented method for providing an augmented image feed, an apparatus for providing an augmented image feed, and a system comprising said apparatus. Specifically, the present disclosure relates to providing an augmented image feed that simulates a virtual mirror for users with enhanced privacy.

### BACKGROUND OF THE INVENTION

Significant technological progress has been made in the last decades with regard to personal health devices and personal care devices including grooming appliances (e.g. electric shavers), for example the integration of the use of mobile applications on smartphones and tablets to aid and facilitate user experience. Nevertheless, there remains challenges in terms of providing users with an intuitive and privacy-sensitive way to simulate a virtual mirror to support a personal health activity (e.g. shaving, tooth brushing, etc.) that requires or benefits from continuous monitoring of the face area of the user.

### SUMMARY OF THE INVENTION

According to a first specific aspect, there is provided a computer-implemented method for providing an augmented image feed, the method comprising: acquiring an original image feed; performing image processing to apply a blurring effect to the full frame of the original image feed so as to generate a blurred image feed; and performing continuous face detection in the original image feed to determine whether a face of a subject is depicted in the original image feed. When no face is detected in the original image feed, the method further comprises controlling a display unit to output the blurred image feed. When a face of a subject is detected in the original image feed, the method further comprises: performing image processing to a first portion of the frame of the blurred image feed corresponding to the detected face of the subject to reverse the blurring effect at the first portion, so as to generate an augmented image feed; and controlling the display unit to output the augmented image feed. The method further comprises discarding the original image feed, the blurred image feed, and the augmented image feed.

In some embodiments, the method may further comprise: performing motion detection in the original image feed to determine at least one of a movement of a subj ect depicted in the original image feed and a posture of a subject depicted in the original image feed; cropping, based on the at least one of the detected movement and posture, a second portion of the frame of the augmented image feed corresponding to a part of the detected face of the subject, so as to generate an updated augmented image feed; and controlling the display unit to output the updated augmented image feed.

In some embodiments, the method may further comprise: acquiring information associated with at least one of: a usage of a personal health device and a guide for using a personal health device; generating, based on the received information, one or more visual elements representing the received information; and controlling the display unit to output the one or more visual elements. In these embodiments, controlling the display unit to output the one or more visual elements may be performed such that the one or more visual elements overlay the augmented image feed. Furthermore, in these embodiments, the information may be acquired from the personal health device. The information acquired from the personal health device may comprise a level of pressure exerted by the personal health device with respect to each of a plurality of portions of the face of a subject.

In some embodiments, acquiring the information associated with a usage of a personal health device may comprise determining a frequency of the usage of the personal health device with respect to each of a plurality of portions of the face of a subject. Determining the frequency of the usage of the personal health device with respect to each of a plurality of portions of the face of the subject may be based on the acquired original image feed.

In some embodiments, the one or more visual elements may be associated with a heat map.

In some embodiments, the method may be performed at a smart phone or a tablet, the smart phone or the tablet comprising an imaging unit through which the original image feed is acquired.

According to a second specific aspect, there is provided an apparatus for providing an augmented image feed, the apparatus comprising: an imaging unit configured to acquire an original image feed; a processing unit configured to: perform image processing to apply a blurring effect to the full frame of the original image feed so as to generate a blurred image feed; and perform continuous face detection in the original image feed to determine whether a face of a subject is depicted in the original image feed; and a display unit configured to display image feed. When no face is detected in the original image feed, the processing unit is further configured to control the display unit to output the blurred image feed. When a face of a subject is detected in the original image feed, the processing unit is configured to: perform image processing to a first portion of the frame of the blurred image feed corresponding to the detected face of the subject to reverse the blurring effect at the first portion, so as to generate an augmented image feed; and control the display unit to output the augmented image feed. The processing unit is further configured to discard the original image feed, the blurred image feed, and the augmented image feed.

According to a third specific aspect, there is provided a system comprising the apparatus as described herein and a personal health device. The apparatus and the personal health device may be configured to communicate with each other, and the communication between the apparatus and the personal health device may be wireless.

According to a fourth specific aspect, there is provided a computer program product comprising a computer readable medium, the computer readable medium having computer readable code embodied therein, the computer readable code being configured such that, on execution by a suitable computer or processor, the computer or processor is caused to perform the method as described herein.

Embodiments of the present disclosure involve combining the use of processes and algorithms (including those associated with face detection and blurring effects) seamlessly to ensure that parts of an image feed not corresponding to a face of a subject is always blurred so that they do not come into view or uploaded online. In addition, when no face is detected in the image feed, the output frame is completely blurred. Thus, the anxiety of using a camera in a bathroom environment can be minimized because privacy is safeguarded. Specifically, embodiments of the present disclosure are particularly useful in ensuring privacy when users performing personal health or personal care activities that require or benefit from the use of a camera and a display screen as a virtual mirror.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 shows a block diagram of a system according to an embodiment; and
Fig. 2 illustrates a computer-implemented method for providing an augmented image feed, according to an embodiment.

### DETAILED DESCRIPTION OF THE EMBODIMENTS

As noted above, there is provided an improved computer-implemented method, an apparatus, and a system, which address the existing problems.

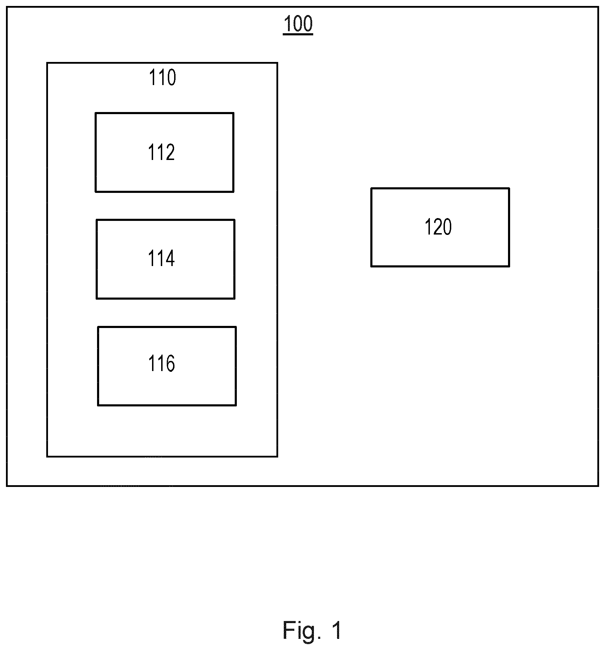

Fig. 1 shows a block diagram of a system 100 according to an embodiment, which comprises am apparatus 110 and a personal health device 120. The apparatus 110 and the personal health device 120 may be configured to communicate with each other, for example via a wireless (or wired) connection. In some embodiments, the apparatus 110 may be a smart phone or a tablet and at least some of the operations described herein may be implemented via a mobile application. The personal health device 120 may be personal care device such as an electric shaver, an electric toothbrush, an electric precision trimmer (e.g. for eyebrow shaping), an electric epilator, or an electric facial brush. The term "personal health device" can be used interchangeably with "personal care device" in the context of the present disclosure.

Although the operations of the system 100 and the apparatus 110 are described below in the context of a single subject, it will be appreciated that the system 100 and the apparatus 110 are capable of providing augmented image feed(s) to a plurality of subjects. In addition, although the operation of the system 100 is described below in the context of personal health and personal care domain, especially personal grooming (e.g. shaving) and skin care, it will be appreciated that the system 100 may be used in applications that can benefit from the provision of an augmented image feed of a subject with enhanced privacy.

As illustrated in Fig. 1, the apparatus 110, which is configured to provide augmented image feed, comprises an imaging unit 112, a processing unit 114, and a display unit 116. Specifically, in some embodiments, augmented image feed may be provided for the purpose of simulating a virtual mirror for a user.

The imaging unit 112, which may be a front-facing camera at a smart phone or a tablet, is configured to acquire an original image feed. The processing unit 114 is configured to perform image processing to apply a blurring effect to the full frame of the original image feed so as to generate a blurred image feed, and perform continuous face detection in the original image feed to determine whether a face of a subject is depicted in the original image feed. In this regard, the processing unit 114 may be configured to perform the face detection operation solely based on the original image feed, or based on the original image feed with information acquired from the personal health device (e.g. a current location of the personal health device 120 with respect to the face of the subject).

The display unit 116 is configured to display image feed. In more detail, when no face is detected in the original image feed, the processing unit 114 is further configured to control the display unit 116 to output the blurred image feed; when a face of a subject is detected in the original image feed, the processing unit 114 is configured to perform image processing to a first portion of the frame of the blurred image feed corresponding to the detected face of the subject to reverse the blurring effect at the first portion, so as to generate an augmented image feed, and control the display unit 116 to output the augmented image feed. Since only either the blurred image feed or the augmented image feed is output via the display unit, privacy with respect to the subject's environments can be increased. Moreover, since image processing is performed to blur the full frame of the image feed as a default procedure, before portion(s) of the frame corresponding to a face can be "un-blurred", privacy can be further ensured.

Furthermore, the processing unit 114 is also configured to discard the original image feed, the blurred image feed, and the augmented image feed. Specifically, the processing unit 114 is configured to discard each of these image feeds after they have been processed or output. For example, once blurring effect is applied to the original image feed to generate a new blurred image feed and face detection is performed with respect to the original image feed, the original image feed is discarded by the processing unit 114.

In some embodiments, the processing unit 114 may be further configured to perform motion detection in the original image feed to determine at least one of a movement of a subject depicted in the original image feed and a posture of a subject depicted in the original image feed, and to crop, based on the at least one of the detected movement and posture, of the frame of the augmented image feed corresponding to a part of the detected face of the subject, so as to generate an updated augmented image feed. The processing unit 114 may then be configure to control the display unit 116 to output the augmented image feed.

As an example, if it is detected that the subject has turned his or her face towards his or her right, the second portion may correspond to the left cheek of the subject, and the updated augmented image feed may depict the left cheek of the subject. This operation therefore allows a user (e.g. the subject) to focus on a particular body part by simulating a "zoom effect", which can be beneficial in particular while performing a personal health activity or a personal care activity. Since the updated augmented image feed only clearly depicts a part of the face of the subject that is of interest and not the environment or other body parts of the subject, privacy and security can be enhanced effectively during use of the apparatus 110 (and the personal health device 120).

In some embodiments, the processing unit 114 may be configured to acquire information associated with at least one of: a usage of the personal health device 120 and a guide for using the personal health device 120 (e.g. shaving guidelines). Specifically, the processing unit 114 may be configured to acquire this information from the personal health device 120, for example via a wireless communication. The information may comprise a level of pressure exerted by the personal health device 120 with respect to each of a plurality of portions of the face of a subject. In some embodiments, the processing unit 114 may be configured to acquire the information associated with a usage of a personal health device 120 by determining a frequency of the usage of the personal health device 120 with respect to each of a plurality of portions of the face of a subject. This determination may be based on the acquired original image feed.

Furthermore, the processing unit 114 may be configured to generate, based on the received information, one or more visual elements representing the received information, and to control the display unit 116 to output the one or more visual elements. The one or more visual elements may be associated with a heat map, for example a heat map indicating the frequency of use of the personal health device 120 with respect to a plurality of portions of the face of the subject. As another example, the one or more visual elements may be representative of metrics associated with the personal health device 120 (e.g. timer information, motion information, pressure information, etc.). The one or more visual elements may also represent contextual feedback associated with the personal health device 120 (e.g. text-based guidance related to a current personal health activity performed using the personal health device 120), and this contextual feedback can be provided alongside the blurred image feed or the augmented image feed. As yet another example, the one or more visual elements may represent guidelines for using the personal health device or improving user experience with the personal health device. The one or more visual elements may be output in a manner such that they overlay the augmented image feed.

The processing unit 114 may control the operation of the apparatus 110 and can implement the method described herein. The processing unit 114 can comprise one or more processors, processing units, multi-core processor or modules that are configured or programmed to control the apparatus 110 in the manner described herein. In particular implementations, the processing unit 114 can comprise a plurality of software and/or hardware modules that are each configured to perform, or are for performing, individual or multiple steps of the method described herein.

Although not shown in the drawing, the apparatus 110 may further comprise a user interface. The user interface may be for use in providing a user of the apparatus 110 with information resulting from the method described herein. In addition, the user interface may be configured to receive a user input. For example, the user interface may allow a user of the apparatus 110 to manually enter instructions, data, or information. In these embodiments, the processing unit 114 may be configured to acquire the user input from the user interface.

Although not shown in the drawing, the apparatus 110 may comprise a memory. Alternatively or in addition, one or more memories may be external to (i.e. separate to or remote from) the apparatus 110. For example, one or more memories may be part of another device. A memory can be configured to store program code that can be executed by the processing unit 114 to perform the method described herein. A memory can be used to store information, data, signals and measurements acquired or made by the processing unit 114 of the apparatus 110. The processing unit 114 may be configured to control a memory to store instructions for performing face detection, for example.

It will be appreciated that the operations of the imaging unit 112, the processing unit 114, and the display unit 116 may be performed simultaneously and/or in a looping format. For example, the imaging unit 112 may be configured to continuously acquire further original image feed which is then processed and used for face detection, while blurring processing and face detection is performed with respect to a current original image feed. Moreover, some of the operations of the different components of the apparatus 110 may be performed simultaneously.

It will be appreciated that Fig. 1 only shows the components required to illustrate an aspect of the system 100 and the apparatus 110 and, in a practical implementation, the system 100 and/or the apparatus 110 may comprise alternative or additional components to those shown.

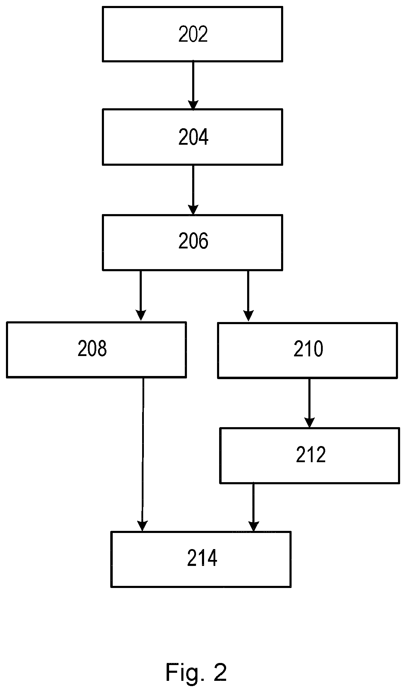

Fig. 2 illustrates a computer-implemented method for providing an augmented image feed, according to an embodiment. This augmented image feed may be provided for the purpose of simulating a virtual mirror for a user. The illustrated method can generally be performed by or under the control of the processing unit 114 of the apparatus 110. The illustrated method will be described below with reference to the apparatus 110 of Fig. 1 and its components. In some implementations, the method may be performed at a smart phone or a tablet. At least some of the method steps described herein may be implemented via a mobile application.

With reference to Fig. 2, at block 202, an original image feed is acquired. In some embodiments, the original image feed may be acquired via an imaging unit (e.g. the imaging unit 112 of the apparatus 110 as illustrated in Fig. 1), such as a camera embedded in a smart phone or a tablet.

Then, at block 204, image processing is performed to apply a blurring effect to the full frame of the original image feed so as to generate a blurred image feed. Subsequently, at block 206, continuous face detection in the original image feed is performed to determine whether a face of a subject is depicted in the original image feed. In this regard, the face detection operation may be performed solely based on the original image feed acquired at block 202, or based on the original image feed acquired at block 202 together with information acquired from a personal health device (e.g. a current location of the personal health device with respect to the face of the subject). A personal health device may be, for example, a grooming device such as an electric shaver, or an electric toothbrush, or an electric epilator, or an electric precision trimmer, or an electric facial brush. As mentioned above with reference to Fig. 1, this personal health device may be configured to communicate with the apparatus 110.

When no face is detected in the original image feed at block 206, the method proceeds to block 208 at which a display unit (e.g. the display unit 116 of the apparatus 110 as illustrated in Fig. 1.) to output the blurred image feed.

On the other hand, when a face of a subject is detected in the original image feed at block 206, the method proceeds to block 210 at which image processing is performed to a first portion of the frame of the blurred image feed corresponding to the detected face of the subject to reverse the blurring effect at the first portion, so as to generate an augmented image feed, and subsequently to block 212 at which the display unit (e.g. the display unit 116 of the apparatus 110) is controlled to output the augmented image feed. Since the output augmented image feed only clearly depicts the face of the subject and not the environment or other body parts of the subject, privacy and security can be enhanced effectively by this method. Moreover, since image processing is performed to blur the full frame of the image feed (at block 2064 as a default procedure, before portion(s) of the frame corresponding to a face can be "un-blurred" (at block 210), privacy can be further ensured.

Subsequent to performing the operation of block 208 or block 212, the method proceeds to block 214 at which image feed(s) are discarded. For example, subsequent to outputting the blurred image feed at block 208, the blurred image feed and the original image feed are discarded at block 214. As another example, subsequent to outputting the augmented image feed at block 212, the original image feed, the blurred image feed, and the augmented image feed are discarded at block 214. Since image feeds are discarded at block 214, privacy of the subject can be ensured as no image data is stored, or transmitted to a different entity.

In some embodiments, the method may further comprise performing motion detection in the original image feed acquired at block 202, to determine at least one of a movement of a subject depicted in the original image feed and a posture of a subject depicted in the original image feed. Furthermore, the method may further comprise cropping, based on the at least one of the detected movement and posture, a second portion of the frame of the augmented image feed corresponding to a part of the detected face of the subject, so as to generate an updated augmented image feed, and controlling the display unit to output the updated augmented image feed.

As an example, if it is detected that the subject has turned his or her face towards his or her right, augmented image feed may be cropped such that it only depicts the left cheek. This operation provides a more intuitive way for user to make use of the augmented image feed, in particular in situations where a user is performing personal health or personal care based on the information provided through the (updated) augmented image feed. For example, by simulating a "zoom effect" that focusses on the subject's left cheek if he or she turns his or her face to the right, the method assumes that the subject (who in this case is the user) wishes to "zoom in" on the left cheek, thus other parts of the image feed that are not of interest can be omitted in order to maximize privacy. Moreover, this can also minimize the required interaction between the user and the system before desired effects (of cropping or "zooming in") can be achieved.

Although not illustrated in Fig. 2, in some embodiment the method may further comprise acquiring information associated with at least one of: a usage of a personal health device and a guide for using a personal health device. This information may be acquired from the personal health device. An example of such information is a level of pressure exerted by the personal health device with respect to each of a plurality of portions of the face of a subject. Alternatively or in addition, acquiring the information may comprise determining a frequency of the usage of the personal health device with respect to each of a plurality of portions of the face of a subject. This determination may be based on the acquired original image feed.

In these embodiments, the method may further comprise generating, based on the received information, one or more visual elements representing the received information, and subsequently controlling the display unit to output the one or more visual elements. The one or more visual elements may be associated with a heat map, for example a heat map indicating a level of pressure exerted by the personal health device with respect to each of a plurality of portions of the face of a subject. As another example, the one or more visual elements may be associated with guidance information for the subject, such as guidance elements to aid a user in shaving his face. Furthermore, in some of these embodiments, the one or more visual elements may be output such that they overlay the augmented image feed.

It will be appreciated that the method illustrated in Fig. 2 (which may or may not include optional operation steps) may be performed in a recurring manner. For example, once the blurred image feed or the augmented image feed is being output via the display unit, image feeds are discarded and the method returns to block 202 at which further original image feed may be acquired. Thus, a continuous output of blurred image feed or augmented image feed can be achieved which simulates a virtual mirror for the subject while enhancing privacy by blurring part(s) of the image feed that do not correspond to the face of the subject. Furthermore, it will also be appreciated that at least some of the method steps illustrated in Fig. 2 may be performed simultaneously, for example for the purpose of achieving a continuous image feed stream to a user.

There is thus provided an improved method for providing an augmented image feed, an improved apparatus for providing an augmented image feed, and a system including the apparatus, which overcome the existing problems.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for providing an augmented image feed, the method comprising:
acquiring (202) an original image feed;
performing (204) image processing to apply a blurring effect to the full frame of the original image feed so as to generate a blurred image feed; and
performing (206) continuous face detection in the original image feed to determine whether a face of a subject is depicted in the original image feed,
wherein when no face is detected in the original image feed, the method further comprises controlling (208) a display unit to output the blurred image feed,
wherein when a face of a subject is detected in the original image feed, the method further comprises:
performing (210) image processing to a first portion of the frame of the blurred image feed corresponding to the detected face of the subject to reverse the blurring effect at the first portion, so as to generate an augmented image feed; and
controlling (212) the display unit to output the augmented image feed,
and wherein the method further comprises discarding (214) the original image feed, the blurred image feed, and the augmented image feed.

2. The method according to claim 1, further comprising:
performing motion detection in the original image feed to determine at least one of a movement of a subject depicted in the original image feed and a posture of a subject depicted in the original image feed;
cropping, based on the at least one of the detected movement and posture, a second portion of the frame of the augmented image feed corresponding to a part of the detected face of the subject, so as to generate an updated augmented image feed; and
controlling the display unit to output the updated augmented image feed.

3. The method according to any one of the preceding claims, further comprising:
acquiring information associated with at least one of: a usage of a personal health device and a guide for using a personal health device;
generating, based on the received information, one or more visual elements representing the received information; and
controlling the display unit to output the one or more visual elements.

4. The method according to claim 3, wherein controlling the display unit to output the one or more visual elements is performed such that the one or more visual elements overlay the augmented image feed.

5. The method according to claim 3 or claim 4, wherein the information is acquired from the personal health device.

6. The method according to claim 5, wherein the information acquired from the personal health device comprises a level of pressure exerted by the personal health device with respect to each of a plurality of portions of the face of a subject.

7. The method according to any one of claims 3 to 6, wherein acquiring the information associated with a usage of a personal health device comprises determining a frequency of the usage of the personal health device with respect to each of a plurality of portions of the face of a subject.

8. The method according to claim 7, wherein determining the frequency of the usage of the personal health device with respect to each of a plurality of portions of the face of the subject is based on the acquired original image feed.

9. The method according to any one of claims 3 to 8, wherein the one or more visual elements are associated with a heat map.

10. The method according to any one of the preceding claims, wherein the method is performed at a smart phone or a tablet, the smart phone or the tablet comprising an imaging unit through which the original image feed is acquired.

11. An apparatus (110) for providing an augmented image feed, the apparatus comprising:
an imaging unit (112) configured to acquire an original image feed;
a processing unit (114) configured to:
perform image processing to apply a blurring effect to the full frame of the original image feed so as to generate a blurred image feed; and
perform continuous face detection in the original image feed to determine whether a face of a subject is depicted in the original image feed; and
a display unit (116) configured to display image feed,
wherein when no face is detected in the original image feed, the processing unit is further configured to control the display unit to output the blurred image feed, and
wherein when a face of a subject is detected in the original image feed, the processing unit is configured to:
perform image processing to a first portion of the frame of the blurred image feed corresponding to the detected face of the subject to reverse the blurring effect at the first portion, so as to generate an augmented image feed; and
control the display unit to output the augmented image feed, and
wherein the processing unit is further configured to discard the original image feed, the blurred image feed, and the augmented image feed.

12. A system (100) comprising the apparatus (110) according to claim 11 and a personal health device (120), wherein the apparatus and the personal health device are configured to communicate with each other.

13. The system (100) according to claim 12, wherein the communication between the apparatus (110) and the personal health device (120) is wireless.

14. A computer program product comprising a computer readable medium, the computer readable medium having computer readable code embodied therein, the computer readable code being configured such that, on execution by a suitable computer or processor, the computer or processor is caused to perform the method according to any one of claims 1 to 10.
